# EUROPÄISCHE PATENTSCHRIFT

(11) **EP 3 137 794 B1**
(45) Veröffentlichungstag und Bekanntmachung des Hinweises auf die Patenterteilung: **03.04.2019**
(21) Anmeldenummer: 15717448.3
(22) Anmeldetag: 10.04.2015
(51) Int. Cl.: F16K 3/02

(54) **LEITROHRSCHIEBER FÜR CHEMISCHE UND PETROCHEMISCHE ANLAGEN**
CONDUIT SLIDER FOR CHEMICAL AND PETROCHEMICAL SYSTEMS
ROBINET-VANNE À OPERCULE TRAVERSANT POUR INSTALLATIONS CHIMIQUES ET PÉTROCHIMIQUES

(30) Priorität: 29.04.2014 DE 102014106001
(43) Veröffentlichungstag der Anmeldung: 08.03.2017
(73) Patentinhaber: Z & J Technologies GmbH, 52355 Düren (DE)
(72) Erfinder: KRIEGER, Stefan, 52459 Inden/Altdorf (DE); GERCEKER, Metin, CH-9422 Staad (CH); TRAVNICEK, Roland, 52355 Düren (DE)
(74) Vertreter: Zech, Stefan Markus
(86) Internationale Anmeldenummer: PCT/EP2015/057812
(87) Internationale Veröffentlichungsnummer: WO 2015/165712

(56) Entgegenhaltungen:
- EP-A1- 0 512 324
- EP-A1- 0 646 742
- DE-U1-202004 011 575
- FR-A1- 2 474 131
- GB-A- 874 169
- US-A- 3 050 077

## Beschreibung

Die Erfindung betrifft einen Leitrohrschieber für chemische und petrochemische Anlagen mit einem Schiebergehäuse, das ein absperrbares Leitrohr und wenigstens eine Schieberplatte aufweist, die in eine Offenstellung und eine Schließstellung und umgekehrt verschiebbar ist, wobei dem Leitrohr ein Dichtsitz zugeordnet ist, der sich entlang des Umfangs des Leitrohrs erstreckt und im Betrieb zumindest in der Schließstellung gegen die Schieberplatte abdichtet.

Ein Leitrohrschieber ist aus dem Stand der Technik bekannt. Ein druckschriftlich bekanntes Beispiel stellt die EP 1 561 980 B1 dar. Hierbei wird ein Leitrohrschieber für eine Verkokungstrommel mit einem Schiebergehäuse offenbart, das ein absperrbares Leitrohr zur Verbindung mit der Verkokungstrommel und zwei Schieberplatten aufweist. Die Schieberplatten sind in eine Offenstellung und eine Schließstellung und umgekehrt verschiebbar. Dem Leitrohr sind ein elastischen Element und ein Dichtsitz zugeordnet und bilden eine handhabbare Sitzeinheit, die sich entlang des Umfangs des Leitrohrs erstreckt, mit dem Schiebergehäuse verbindbar ist und im Betrieb zumindest in der Schließstellung gegen die Schieberplatte abdichet. Die EP 0 646 742 A1 offenbart einen Leitrohrschieber mit einem Schiebergehäuse, das ein absperrbares Leitrohr und wenigstens eine Schieberplatte aufweist, die in eine Offenstellung und eine Schließstellung und umgekehrt verschiebbar ist, wobei dem Leitrohr ein Dichtsitz zugeordnet ist, der sich entlang des Umfangs des Leitrohrs erstreckt und im Betrieb zumindest in der Schließstellung gegen die Schieberplatte abdichtet, wobei in dem Dichtsitz wenigstens eine Umfangsnut ausgebildet ist, in der ein metallischer Formring angeordnet ist, wobei der Dichtsitz einen Dichtring aufweist, wobei an der Oberseite des Dichtrings die wenigstens eine Umfangsnut ausgebildet ist, in der der Formring angeordnet ist, und an der Unterseite des Dichtrings wenigstens eine Dichtfläche angeordnet ist, die zumindest in der Schließstellung an der Schieberplatte anliegt.

Ein Nachteil an diesem bekannten Leitrohrschieber ist, dass der Dichtsitz aus mehreren zueinander verbundenen bzw. verschraubten Einzelbauteilen besteht, wie beispielsweise dem elastischen Element, Ringeinsatz, Führungsring und Dichtring. Zum anderen ist der Aus- bzw. Einbau einer Schieberplatte im Schiebergehäuse sehr zeit- und kostenaufwendig, da jedes einzelne Bauteil des Dichtsitzes demontiert bzw. im Anschluss wieder verbaut werden muss.

Es ist daher die Aufgabe der vorliegenden Erfindung, einen Leitrohrschieber für chemische und petrochemische Anlagen anzugeben, der zum einen die Dichtigkeit zwischen Dichtsitzes und Schieberplatte gewährleistet und zum anderen eine kompakte, handhabbare, einfache und kostengünstige Möglichkeit bietet, die Schieberplatte aus dem Schiebergehäuse ein- und auszubauen.

Zur Lösung der oben genannten Aufgabe wird ein Leitrohrschieber für chemische und petrochemische Anlagen mit den Merkmalen des Anspruchs 1 vorgeschlagen. Der Leitrohrschieber für chemische und petrochemische Anlagen mit einem Schiebergehäuse, weist ein absperrbares und wenigstens eine Schieberplatte auf. Die Schieberplatte ist in eine Offenstellung und eine Schließstellung und umgekehrt verschiebbar. Dem Leitrohr ist ein Dichtsitz zugeordnet. Der Dichtsitz erstreckt sich entlang des Umfangs des Leitrohrs und dichtet im Betrieb zumindest in der Schließstellung gegen die Schieberplatte ab. In dem Dichtsitz ist wenigstens eine Umfangsnut ausgebildet. Darin ist ein metallischer Formring mit einer Medienbefüllung angeordnet.

Ein wesentlicher Punkt der Erfindung liegt somit darin, dass dem Leitrohr ein Dichtsitz zugeordnet ist, der eine Umlaufnut aufweist, in der ein metallischer Formring mit einer Medienbefüllung angeordnet ist. Mit anderen Worten wird am Leitrohr ein Dichtsitz mittels eines metallischen Formrings bereitgestellt, der das Leitrohr gegen die Schieberplatte bzw. Blende abdichtet. Die Umfangsnut kann dabei in einer der Schieberplatte zugewandten Fläche des Dichtsitzes ausgebildet sein. Hierdurch wird eine direkte Abdichtung mittels des Formrings zwischen dem Dichtsitz und der Schieberplatte ermöglicht. Durch die Zuordnung des Dichtsitzes zum Leitrohr wird somit ein Leitrohrschieber für chemische und petrochemische Anlagen geschaffen, der die Dichtigkeit zwischen Dichtsitz und Schieberplatte gewährleistet. Durch die erfindungsgemäße Ausgestaltung des Dichtsitzes werden Einzelbauteile eingespart und somit eine kompakte, handhabbare, einfache und kostengünstige Möglichkeit geboten, die Schieberplatte aus dem Schiebergehäuse ein- und ausbauen zu können.

Unter einem metallischen Formring mit einer Medienbefüllung ist eine elastische Metalldichtung zu verstehen. Die Medienbefüllung kann sowohl aus einem festen oder gasförmigen Medium bestehen. Dieser Formring hat den Vorteil, dass er sowohl sehr hohe, als auch sehr tiefe Temperaturen, hohen Drücken, extremen Unterdrücke, aggressiven Chemikalien und selbst intensiver Strahlung standhält. Durch eine gezielte Materialauswahl, kann bei dem Formring eine optimale Belastung, Rückfederung und Verformbarkeit bzw. Härte zur größtmöglichen Dichtwirkung erzielt werden. Ebenso kann die Lauffläche des Formrings galvanisiert werden, so dass unnötige Teile entfallen und damit mögliche Ausfallursachen verringert werden.

Aus dem Stand der Technik ist bekannt, dass der Formring in der Schließstellung an der Schieberplatte anliegt. Somit wird im geschlossenen Zustand des Leitrohrschiebers eine Abdichtung der Verkokungstrommel gegen das Schiebergehäuse sichergestellt. Auch im geöffneten Zustand des Leitrohrschiebers kann ebenfalls eine Abdichtung der Verkokungstrommel gegen das Schiebergehäuse sichergestellt werden, indem auch in dieser Stellung der Formring an der Trägerplatte anliegt.

Der Dichtsitz weist zusätzlich einen Dichtring auf. An der Oberseite des Dichtrings ist wenigstens eine Umfangsnut ausgebildet, in der der Formring angeordnet ist. An der Unterseite des Dichtrings ist wenigstens eine Dichtfläche angeordnet, die zumindest in der Schließstellung an der Schieberplatte anliegt. Die Richtungsangaben "oben" und "unten" beziehen sich auf die Einbaulage des Schiebers. In der Einbaulage des Schiebers ist die Längsachse des Leitrohres vertikal ausgerichtet. Die Schieberplatte wird in horizontaler Richtung, d.h. senkrecht zur Längsachse des Leitrohres verschoben. Die Oberseite des Dichtrings ist gegenüber der Unterseite des Dichtrings angeordnet und stellt die Seite dar, die dem Leitrohr zugewandt ist. Als Unterseite des Dichtrings ist die Seite definiert, die der Schieberplatte zugewandt ist. Mit anderen Worten ist der Formring zwischen dem Leitrohr und dem Dichtring angeordnet. Der Dichtring dichtet mit seiner wenigstens einen Dichtfläche gegen die Schieberplatte ab. Der Formring stellt die Dichtigkeit zwischen Leitrohr und Dichtring sicher. Die Dichtfläche des Dichtrings kann dabei eine Dicht- und Schabkante aufweisen. Durch die Zwischenschaltung eines Dichtrings zwischen Leitrohr und Schieberplatte, kann so die Dichtigkeit zwischen Dichtsitz und Schieberplatte noch weiter optimiert werden. Auch im geöffneten Zustand des Leitrohrschiebers kann ebenfalls eine Abdichtung der Verkokungstrommel gegen das Schiebergehäuse sichergestellt werden, indem auch in dieser Stellung die Dichtfläche des Dichtrings an der Trägerplatte anliegt. Durch die Wahl der richtigen Formringgröße können zum Beispiel durch Verschleiß auftretende Spaltveränderungen zwischen Dichtsitz und Schieberplatte bzw. zwischen Leitrohr und Dichtring optimal abgefangen und somit eine optimale Dichtung sichergestellt werden.

Vorzugsweise weist der Dichtsitz ein wenigstens einfach wirkendes, statisches Dichtsystem auf, das mit der Schieberplatte zusammenwirkt. Dieses einfach wirkende Dichtsystem besteht aus einem Dichtring, in dem ein Formring angeordnet ist. Der Dichtsitz kann darüber hinaus ein wenigstens zweifach wirkendes, insbesondere dreifach oder mehrfach wirkendes, statisches Dichtsystem aufweisen, das mit der Schieberplatte zusammenwirkt. Dieses zweifach bzw. drei- oder mehrfach wirkende Dichtsystem kann zusätzlich zu dem Formring oder dem Dichtring, in dem ein Formring angeordnet ist, weitere Dichtungen aufweisen, um die Dichtigkeit zwischen Leitrohr bzw. Dichtsitz und Schieberplatte noch weiter zu verbessern.

Des Weiteren kann vorzugsweise der Dichtsitz eine radial innen angeordneten Dicht- und Schabkante und eine Gas- insbesondere Dampfsperre aufweist, die zwischen dem radial außen angeordneten Formring und der radial innen angeordneten Dicht- und Schabkante ausgebildet ist. Die Dicht- und Schabkante und die Gas- insbesondere Dampfsperre sind dabei ebenfalls wie der Formring in der der Schieberplatte zugewandten Fläche des Dichtsitzes angeordnet. Durch diese Anordnung der unterschiedlichen Dichtungen am Dichtsitz kann die Dichtigkeit zwischen Dichtsitz und Schieberplatte weiter optimiert werden. Eine Undichtigkeit in Form von flüssigen oder gasförmigen Materialaustausch zwischen Verkokungstrommel und Schiebergehäuse kann somit noch weiter minimiert werden. Ebenso ist es möglich, dass an Stelle des radial außen angeordneten Formrings ein radial außen angeordneten Dichtring angeordnet ist, wobei an der Oberseite des Dichtrings wenigstens eine Umfangsnut ausgebildet ist, in der der Formring angeordnet ist, und an der Unterseite des Dichtrings wenigstens eine Dichtfläche angeordnet ist.

Der Formring Wird in der Umfangsnut des Dichtrings verpresst. Durch das Verpressen des Formrings in der Umfangsnut wird ein sicherer Halt des Formrings im Dichtsitz gewährleistet. Ebenso wird die Verpressung des Formrings in der Umfangsnut durch die Medienbefüllung noch weiter optimiert. Der intern oder extern aufgebrachte Differenzdruck, mittels der Medienbefüllung, verbessert die Anpresskraft der Dichtung bzw. des Formrings in der Umfangsnut.

Des Weiteren kann der Dichtsitz vorzugsweise zwei konzentrische Umfangsnuten aufweisen, in denen jeweils ein Formring angeordnet ist. Ebenso kann der dem Dichtsitz zugeordnete Dichtring zwei konzentrische Umfangsnuten aufweisen, in denen jeweils ein Formring angeordnet ist. Durch die Anordnung von zwei konzentrischen Umfangsnuten, in denen jeweils ein Formring angeordnet ist, wird die Dichtwirkung des Dichtsitzes weiter verbessert. Zwei Formringe, die an dem Dichtring angeordnet sind, erhöhen zusätzlich zur verbesserten Dichtigkeit auch die Stabilität innerhalb des Dichtsitzes.

Vorzugsweise kann der Formring aus einem O-Ring mit einer Gasbefüllung bestehen. Dieser O-Ring weist sehr gute Eigenschaften gegenüber umweit- und betriebsbedingten Einflüssen auf, wie beispielsweise Temperaturen, Druck, Chemikalien oder Strahlung. Durch eine gezielte Materialauswahl des O-Ringmaterials, kann eine optimale Belastung, Rückfederung und Verformbarkeit bzw. Härte zur größtmöglichen Dichtwirkung des O-Rings erzielt werden.

Es besteht auch die Möglichkeit, dass der Formring aus einem C-Ring mit einem darin angeordneten, elastischen Element besteht. Der C-Ring kann aus einem Metall bestehen. Das elastische Element ist im Inneren des C-Rings angeordnet und kann beispielsweise aus einem federnden Material bestehen. Ein C-Ring mit einem elastischen Element weist gute Rückstelleigenschaften auf. Er dient als zusätzliche Druckunterstützung der Abdichtung, die durch Mantel- und Federkräfte sowie Systemdruck erzielt wird. Durch den C-Ring mit einem elastischen Element wird eine weitere Möglichkeit als Formring angeboten, eine optimale Dichtigkeit zwischen Leitrohr bzw. Dichtsitz und Schieberplatte sicherzustellen.

Vorzugsweise kann der Leitrohrschieber als Doppelplattenschieber mit zwei parallelen Schieberplatten ausgebildet sein.

Ebenso bevorzugt kann der Leitrohrschieber als Einplattenschieber mit einer einzigen Schieberplatte ausgebildet sein.

Die Erfindung wird im Folgenden anhand der Zeichnung näher erläutert. Es zeigen:
- Fig. 1: einen Querschnitt eines Leitrohrschiebers nach einem Beispiel, das nicht Teil der Erfindung ist; und
- Fig. 2: einen Querschnitt eines Leitrohrschiebers nach einem Ausführungsbeispiel.

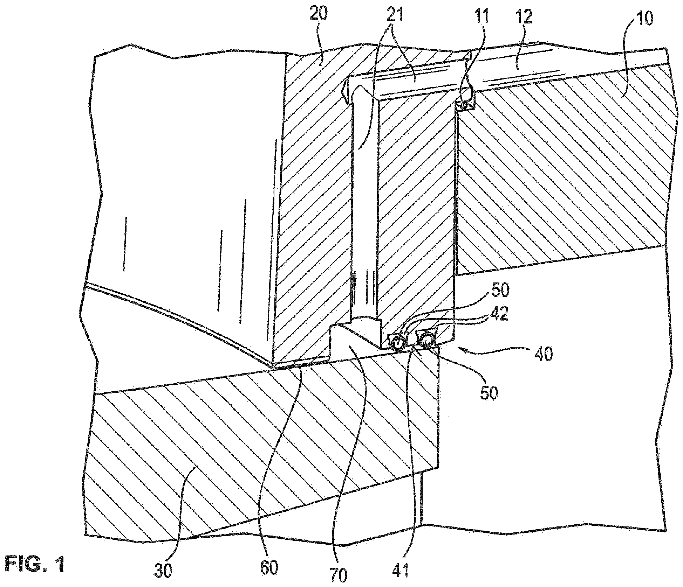

Der Leitrohrschieber gemäß Fig. 1 kommt in Verkokungsanlagen, insbesondere in Delayed Cokeranlagen zum Einsatz, bei denen Verkokungstrommeln mit Absperrorganen versehen werden. Konkret wird der in Fig. 1 dargestellte Leitrohrschieber zum Verschließen der unteren Austrittsöffnung einer Verkokungstrommel (auch Kokstrommel) verwendet (bottom de-heading). Es ist auch möglich, das erfindungsgemäße Konzept, das in dem Leitrohrschieber gemäß Fig. 1 verwirklicht ist, in einem Absperrorgan einzusetzen, das zum Öffnen und Verschließen der oberen Austrittsöffnung der Verkokungstrommel eingesetzt wird (top de-heading). Überdies kann das erfindungsgemäße Konzept bzw. allgemein die Erfindung im Zusammenhang mit Absperrorganen verwendet werden, die in anderen Industriebereichen wie Ethylen, FCCU, Phosgen, etc. zum Einsatz kommen. Generell kann der Leitrohrschieber nach dem erfindungsgemäßen Ausführungsbeispiel bzw. allgemein die Erfindung als Absperrorgan in chemischen und petrochemischen Anlagen verwendet werden.

Fig. 1 zeigt einen Leitrohrschieber für chemische und petrochemische Anlagen, insbesondere für eine Verkokungstrommel, mit einem Schiebergehäuse 10. Der Leitrohrschieber weist ein absperrbares Leitrohr 20 auf. Ferner weist der Leitrohrschieber eine Schieberplatte 30 auf. Die Schieberplatte 30 ist in eine Offenstellung und eine Schließstellung und umgekehrt verschiebbar. Das Leitrohr 20 stellt ein kreisrundes Rohr dar. Ebenso weist die Schieberplatte 30 bzw. Blende eine kreisrunde Geometrie auf. Andere Formen der Schieberplatte sind ebenfalls möglich. So kann beispielsweise die Schieberplatte einteilig und rechteckig ausgestaltet sein.

Das Leitrohr 20 ist mittels eines Dichtelements 11 gegen das Schiebergehäuse 10 abgedichtet. Ferner ist dem Leitrohr 20 ein Dichtsitz 40 zugeordnet. Der Dichtsitz 40 erstreckt sich entlang des Umfangs des Leitrohrs 20 und dichtet im Betrieb zumindest in der Schließstellung das Leitrohr 20 gegen die Schieberplatte 30 ab.

Der Dichtsitz 40 weist eine Fläche 41 auf. Diese Fläche 41 ist an der Seite des Dichtsitzes 40 angeordnet, die der Schieberplatte 30 zugewandt ist. In dieser Fläche 41 sind zwei Umfangsnuten 42 ausgebildet. In den beiden Umfangsnuten 42 ist jeweils ein metallischer Formring 50 angeordnet. Der Formring 50 ist mit einem Medium, beispielsweise Gas, befüllt. Dabei liegt der Formring 50 zumindest in der Schließstellung an der Schieberplatte 30 an und dichtet so das Leitrohr 20 gegen die Schieberplatte 30 ab. Auch im geöffneten Zustand des Leitrohrschiebers kann ebenfalls eine Abdichtung der Verkokungstrommel gegen das Schiebergehäuse 10 sichergestellt werden, indem auch in dieser Stellung der Formring 50 an der Schieberplatte 20 anliegt.

Der Formring 50 ist in dem gezeigten Beispiel ein metallischer O-Ring. Dieser metallische O-Ring ist in die Umfangsnut 42 verpresst. Durch diese Verpressung wird ein sicherer Halt des Formrings 50 in der Umfangsnut 42 sichergestellt. Der metallische O-Ring ist darüber hinaus mit einem Medium, in diesem konkreten Ausführungsbeispiel mit einem Gas, gefüllt. Durch diese Gasdruckbefüllung wird die Verpressung des Formrings 50 in der Umfangsnut 42 noch weiter optimiert. Der intern oder extern aufgebrachte Differenzdruck, mittels der Medienbefüllung, verbessert die Anpresskraft der Dichtung bzw. des Formrings 50 in der Umfangsnut 42.

Die beiden Formringe 50 sind radial außen an dem Dichtsitz 40 angeordnet. Ferner weist der Dichtsitz 40 eine radial innen angeordnete Dicht- und Schabkante 60 auf. Diese Dicht- und Schabkante 60 liegt ebenfalls zumindest in der Schließstellung an der Schieberplatte 30 an und dichtet so ebenfalls das Leitrohr 20 gegen die Schieberplatte 30 ab. Zwischen den radial außen angeordneten Formringen 50 und der radial innen angeordneten Dicht- und Schabkante 60 ist weiterhin eine Gas- insbesondere Dampfsperre 70 ausgebildet. Innerhalb des Leitrohrs 20 ist ein Spül- und Sperrdampfkanal 21 angeordnet. Innerhalb des Schiebergehäuses 10 ist ein Spül- und Sperrdampfkanal 12 angeordnet. Die beiden Spül- und Sperrdampfkanäle 12, 21 sind miteinander gekoppelt. Diese Gas- insbesondere Dampfsperre 70 ist durch die beiden Spül- und Sperrdampfkanäle 12, 21 mit einer Spül- und Sperrdampfquelle verbunden.

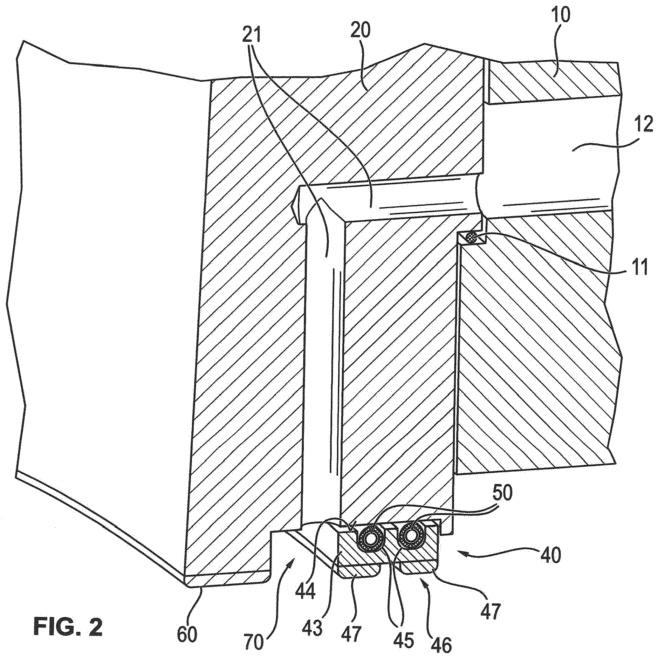

Fig. 2 zeigt ein Ausführungsbeispiel eines erfindungsgemäßen Leitrohrschiebers. Der grundsätzliche Aufbau des Leitrohrschiebers in Fig. 2 entspricht dem Leitrohrschieber, der in Fig. 1 gezeigt ist. Lediglich weist der Dichtsitz 40 einen zusätzlichen Dichtring 43 auf.

Der Dichtring 43 besitzt eine Oberseite 44 und eine Unterseite 46. Als Unterseite 46 des Dichtrings 43 ist die Seite definiert, die der Schieberplatte 30 zugeordnet ist. Die Oberseite 44 des Dichtrings 43 ist gegenüber der Unterseite 46 des Dichtrings 43 angeordnet. Die Oberseite 44 ist dem Leitrohr 20 zugewandt. An der Unterseite 46 des Dichtrings 43 sind zwei Dichtflächen 47 angeordnet. Die Dichtflächen 47 liegen zumindest in der Schließstellung an der Schieberplatte 30 an. Auch im geöffneten Zustand des Leitrohrschiebers kann ebenfalls eine Abdichtung der Verkokungstrommel gegen das Schiebergehäuse 10 sichergestellt werden, indem auch in dieser Stellung die beiden Dichtflächen 47 an der Schieberplatte 20 anliegen. Die Dichtfläche 47 des Dichtrings 43 kann dabei eine Dicht- und Schabkante aufweisen.

An der Oberseite 44 des Dichtrings 43 sind zwei Umfangsnuten 45 ausgebildet. In diesen Umfangsnuten 45 ist jeweils ein Formring 50 angeordnet. Der Formring 50 liegt dabei zum einen an dem Dichtring 43 und zum anderen an dem Leitrohr 20 an. Auch in diesem gezeigten Ausführungsbeispiel sind die Formringe 50 zwei metallische O-Ringe. Diese metallischen O-Ringe sind in den Umfangsnuten 45 verpresst. Durch diese Verpressungen wird ein sicherer Halt der Formringe 50 in den Umfangsnuten 45 sichergestellt. Die metallischen O-Ringe sind darüber hinaus mit einem Medium, in diesem konkreten Ausführungsbeispiel mit einem Gas, gefüllt. Durch diese Gasdruckbefüllung werden die Verpressungen der Formringe 50 in den Umfangsnuten 45 noch weiter optimiert. Der intern oder extern aufgebrachte Differenzdruck, mittels der Medienbefüllung, verbessert die Anpresskraft der Dichtung bzw. der Formringe 50 in den Umfangsnuten 45.

### Bezugszeichenliste

- 10: Schiebergehäuse
- 11: Dichtelement
- 12: Spül- und Sperrdampfkanal
- 20: Leitrohr
- 21: Spül- und Sperrdampfkanal
- 30: Schieberplatte
- 40: Dichtsitz
- 41: Fläche
- 42: Umfangsnut
- 43: Dichtring
- 44: Oberseite
- 45: Umfangsnut
- 46: Unterseite
- 47: Dichtfläche
- 50: Formring
- 60: Dicht- und Schabkante
- 70: Gas- insbesondere Dampfsperre

## Patentansprüche

1. Leitrohrschieber für chemische und petrochemische Anlagen, mit einem Schiebergehäuse (10), das ein absperrbares Leitrohr (20) und wenigstens eine Schieberplatte (30) aufweist, die in eine Offenstellung und eine Schließstellung und umgekehrt verschiebbar ist, wobei dem Leitrohr (20) ein Dichtsitz (40) zugeordnet ist, der sich entlang des Umfangs des Leitrohrs (20) erstreckt und im Betrieb zumindest in der Schließstellung gegen die Schieberplatte (30) abdichtet, wobei in dem Dichtsitz (40) wenigstens eine Umfangsnut (45) ausgebildet ist, in der ein metallischer Formring (50) angeordnet ist,
wobei der Dichtsitz (40) einen Dichtring (43) aufweist, wobei an der Oberseite (44) des Dichtrings (43) die wenigstens eine Umfangsnut (45) ausgebildet ist, in der der Formring (50) angeordnet ist, und an der Unterseite (46) des Dichtrings (43) wenigstens eine Dichtfläche (47) angeordnet ist, die zumindest in der Schließstellung an der Schieberplatte (30) anliegt,
wobei der metallische Formring (50) mit einer Medienbefüllung zur Verpressung des Formrings (50) in der Umfangsnut (45) gefüllt ist.

2. Leitrohrschieber nach einem der vorhergehenden Ansprüche,
**dadurch gekennzeichnet, dass**
der Dichtsitz (40) ein wenigstens einfach wirkendes, statisches Dichtungssystem aufweist, das mit der Schieberplatte (30) zusammenwirkt.

3. Leitrohrschieber nach einem der vorhergehenden Ansprüche,
**dadurch gekennzeichnet, dass**
der Dichtsitz (40) eine radial innen angeordneten Dicht- und Schabkante (60) und eine Gas- insbesondere Dampfsperre (70) aufweist, die zwischen dem radial außen angeordneten Formring (50) und der radial innen angeordneten Dicht- und Schabkante (60) ausgebildet ist.

4. Leitrohrschieber nach einem der vorhergehenden Ansprüche,
**dadurch gekennzeichnet, dass**
der Dichtsitz (40) zwei konzentrische Umfangsnuten (45) aufweist, in denen jeweils ein Formring (50) angeordnet ist.

5. Leitrohrschieber nach einem der vorhergehenden Ansprüche,
**dadurch gekennzeichnet, dass**
der Formring (50) aus einem O-Ring mit einer Gasbefüllung besteht.

6. Leitrohrschieber nach einem der vorhergehenden Ansprüche,
**dadurch gekennzeichnet, dass**
der Formring (50) aus einem C-Ring mit einem darin angeordneten, elastischen Element besteht.

7. Leitrohrschieber nach einem der vorhergehenden Ansprüche,
**dadurch gekennzeichnet, dass**
der Leitrohrschieber als Doppelplattenschieber mit zwei parallelen Schieberplatten (30) ausgebildet ist.

8. Leitrohrschieber nach einem der Ansprüche 1 bis 3,
**dadurch gekennzeichnet, dass**
der Leitrohrschieber als Einplattenschieber mit einer einzigen Schieberplatte (30) ausgebildet ist.

## Claims

1. A guide tube slider for chemical and petrochemical plants, having a slider housing (10), which has a guide tube (20), which can be shut off, and at least one slider plate (30), which can be displaced into an open position and a closed position and vice versa, wherein a seal seat (40) is assigned to the guide tube (20), which extends along the circumference of the guide tube (20) and, during operation, seals against the slider plate (30) at least in the closed position, wherein at least one circumferential groove (45) is formed in the seal seat (40), in which circumferential groove a metallic shaped ring (50) is arranged, wherein the seal seat (40) has a sealing ring (43), wherein the at least one circumferential groove (45) is formed on the upper side (44) of the sealing ring (43), in which circumferential groove the shaped ring (50) is arranged, and at least one sealing surface (47) is arranged on the underside (46) of the sealing ring (43), which sealing surface bears against the slider plate (30) at least in the closed position, wherein the metallic shaped ring (50) is filled with a media filling for compressing the shaped ring (50) in the circumferential groove (45).

2. The guide tube slider according to one of the preceding claims, **characterized in that** the seal seat (40) has an at least single-acting, static sealing system, which interacts with the slider plate (30).

3. The guide tube slider according to one of the preceding claims, **characterized in that** the seal seat (40) has a radially internally arranged sealing and scraping edge (60) and a gas barrier, in particular vapour barrier (70), which is formed between the radially externally arranged shaped ring (50) and the radially internally arranged sealing and scraping edge (60).

4. The guide tube slider according to one of the preceding claims, **characterized in that** the seal seat (40) has two concentric circumferential grooves (45), in which one shaped ring (50) is arranged in each case.

5. The guide tube slider according to one of the preceding claims, **characterized in that** the shaped ring (50) consists of an O-ring with a gas filling.

6. The guide tube slider according to one of the preceding claims, **characterized in that** the shaped ring (50) consists of a C-ring with an elastic element arranged therein.

7. The guide tube slider according to one of the preceding claims, **characterized in that** the guide tube slider is constructed as a double-plate slider with two parallel slider plates (30).

8. The guide tube slider according to one of Claims 1 to 3, **characterized in that** the guide tube slider is constructed as a single-plate slider with a single slider plate (30).

## Revendications

1. Robinet-vanne à opercule traversant pour des installations chimiques et pétrochimiques avec un boîtier de vanne (10), qui comporte un conduit obturable (20) et au moins un obturateur coulissant (30) qui peut se déplacer d'une position ouverte à une position fermée et inversement, une portée d'étanchéité (40) étant attribuée au conduit (20), qui s'étend le long de la circonférence du conduit (20) et en fonctionnement assure l'étanchéité par rapport à l'obturateur coulissant (30) au moins dans la position fermée, au moins une gorge périphérique (45) étant constituée dans la portée d'étanchéité (40), dans laquelle est disposée une bague profilée métallique (50), la portée d'étanchéité (40) comportant une bague d'étanchéité (43), au moins une gorge périphérique (45) étant constituée sur la face supérieure (44) de la bague d'étanchéité (43), dans laquelle la bague profilée (50) est disposée et au moins une portée d'étanchéité (47) étant disposée sur la face inférieure (46) de la bague d'étanchéité (43), qui s'applique à l'obturateur coulissant (30) au moins dans la position fermée, la bague profilée métallique (50) étant remplie d'un milieu pour compression de la bague profilée (50) dans la gorge périphérique (45).

2. Robinet-vanne à opercule traversant selon l'une quelconque des revendications précédentes, **caractérisé en ce que** la portée d'étanchéité (40) comporte un système d'étanchéification statique fonctionnant au moins simplement, qui coopère avec l'obturateur coulissant (30).

3. Robinet-vanne à opercule traversant selon l'une quelconque des revendications précédentes, **caractérisé en ce que** la portée d'étanchéité (40) comporte un bord d'étanchéité et de raclage (60) disposé radialement à l'intérieur et une barrière à gaz notamment de vapeur (70), qui est constituée entre la bague profilée (50) disposée radialement à l'extérieur et la bord d'étanchéité et de raclage (60) disposé radialement à l'intérieur.

4. Robinet-vanne à opercule traversant selon l'une quelconque des revendications précédentes, **caractérisé en ce que** la portée d'étanchéité (40) comporte deux gorges périphériques concentriques (45) dans lesquelles est respectivement disposée une bague profilée (50).

5. Robinet-vanne à opercule traversant selon l'une quelconque des revendications précédentes, **caractérisé en ce que** la bague profilée (50) est composée d'un joint torique avec un remplissage de gaz.

6. Robinet-vanne à opercule traversant selon l'une quelconque des revendications précédentes, **caractérisé en ce que** la bague profilée (50) est composée d'une bague en C avec un élément élastique disposé dedans.

7. Robinet-vanne à opercule traversant selon l'une quelconque des revendications précédentes, **caractérisé en ce que** le robinet-vanne à opercule traversant est constitué comme vanne à double opercule avec deux obturateurs coulissants parallèles (30).

8. Robinet-vanne à opercule traversant selon l'une quelconque des revendications 1 à 3, **caractérisé en ce que** le robinet-vanne à opercule traversant est constitué comme vanne à un opercule avec un obturateur coulissant unique (30).
